# EUROPEAN PATENT SPECIFICATION

(11) **EP 1 286 513 B1**
(45) Date of publication and mention of the grant of the patent: **19.10.2005**
(21) Application number: 01410103.4
(22) Date of filing: 14.08.2001
(51) Int. Cl.: H04L 29/06, H04L 29/08

(54) **Message broker**
Nachrichten-Vermittler
Médiateur de message

(43) Date of publication of application: 26.02.2003
(73) Proprietor: Hewlett-Packard Company, Palo Alto, CA 94304 (US)
(72) Inventor: Picca, André, 38610 Gieres (FR); Lechner, Stephane, 01210 Ornex (FR); Eckert, Philippe, 1004 Lausanne (CH)
(74) Representative: Lloyd, Richard Graham

(56) References cited:
- EP-A- 0 959 586
- WO-A-00/78005
- US-A- 6 023 722
- US-A- 6 088 796

## Description

### Field of the Invention

This invention relates to a message broker for providing remote access to an intranet and a server that is operable to link an intranet and a message broker.

### Background of the Invention

It is often desirable for information located on an intranet to be available from outside the intranet, for example over the Internet. One method of doing this is to have a duplicate web server outside the intranet firewall which is provided with that portion of the information stored on the intranet to which it is desired to provide public access. This however necessarily requires duplication of resources. Alternatively, it is possible to provide authentication or password protection on the intranet server to allow access to the intranet through a fire wall via the Internet. However, there is necessarily a security risk inherent in allowing access from the Internet directly to an intranet by this method.

An aim of the present invention is to reduce or overcome the above problem.

US-A-6088796 shows an access server for location outside a firewall and a database server located within a firewall, where requests from the Internet are received by the access server and passed through a connection between a messenger system on the access server and a user agent on the database server through the firewall. US-A-6023722 shows a messaging and queuing unit for distributing requests to one of a plurality of server units and returning the responses.

### Summary of the Invention

According to a first aspect of the invention we provide a message broker for providing remote access to an intranet, the message broker comprising a permanent message channel, a client adapter and a server channel adapter, the client adapter being operable to receive a request encoded in an Internet protocol format comprising request information, place a message comprising destination information and the request information in the permanent channel, the message broker being operable to establish a temporary message channel on receipt of a request, the server channel adapter being operable to receive a message request from the intranet encoded in an Internet protocol and identifying the permanent channel, send a pull request to the permanent channel and transmit a message contained in the permanent channel to the intranet, receive a message from the intranet comprising response information, and place a message comprising the response information in the temporary channel, the client adapter may be further operable to send a pull request to the temporary channel, receive a message from the temporary channel, and transmit a client response encoded in an Internet protocol accordingly.

The Internet protocol may be HTTP.

When the client response is transmitted, the message broker may be operable to reallocate the temporary channel.

The message broker may be operable to authorise the request prior to placing the request information in the permanent message channel.

The intranet may comprise an intranet web server and the destination information may comprise the host name and port number of the intranet web server.

According to a second aspect of the invention, we provide a server adapter which is operable to link a client system comprising an intranet and a message broker having a permanent message channel, the server adapter being operable to send a message request encoded in Internet protocol format to the message broker comprising source information identifying the permanent message channel, and receive a response from the message broker, and, where the response comprises a message, read the message to identify request information and destination information, transmit the request to a server of the intranet identified by the destination information, receive response information from the server in response to the request, and transmit a message comprising response information encoded in an Internet protocol to the message broker, and where the response comprises a time out, send a further message comprising source information identifying the permanent message channel to the message broker.

The server adapter destination information may comprises the host name and port number of the intranet server.

The server adapter Internet protocol may comprise HTTP.

### Description of the Drawings

The invention will now be described by way of example with reference to the accompanying drawings wherein:
Figure 1 is a diagrammatic illustration of an Internet communication system comprising a message broker,
Figure 2 is a diagram of the operation of the system of Figure 1,
Figure 3 is an illustration of an Internet communication system comprising a further message broker,
Figure 4 is an illustration of an Internet communication system comprising a message broker embodying the present invention, and
Figure 5 is a diagrammatic illustration of a further Internet communication system

### Description of the Preferred Embodiments

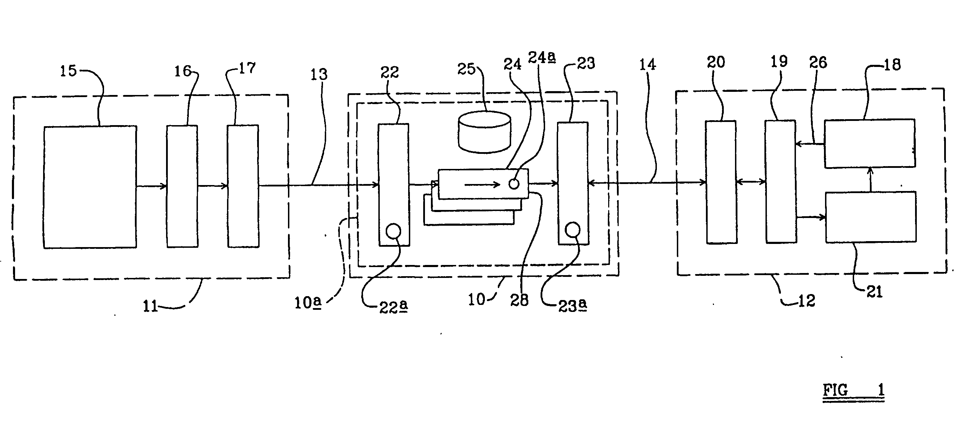

Referring now to Figure 1, a message broker is generally indicated at 10 operable to pass messages between a first client system 11 and a second client system 12. In this example, the message broker 10, first client system 11 and second client system 12 are connected via Internet links shown by arrows 13, 14 respectively. The first client system 11 comprises a publisher module, generally indicated at 15 which generates message information which is to be passed to the client system 12. The first client system is provided with a transmission module 16 to receive the message information from the publisher module 15 and forward it to the message broker 10 via the Internet link 13. The first client system 11 is also provided with a firewall 17, through which all communications between the client system 11 and the Internet pass and which in the present example is set to block incoming HTTP (HyperText Transfer Protocol) requests. In similar fashion, the second client system 12 comprises a subscriber module 18 operable to receive messages from the first client system 11. The second client system 12 is provided with a receiver module 19 operable to receive messages from the message broker 10 via the Internet connection 14, and a firewall 20 which is set to block all incoming HTTP requests. The subscriber module 18 receives instructions to send a message request from a call back module 21.

The first client system 11 and the second client system 12 in the present example comprise intranets of conventional type provided with access to the Internet through respective firewalls 17, 20, although it will be apparent that the client systems may comprise any appropriate system as desired.

The message broker 10 comprises a Web server with a multi-thread servlet engine 10a. The message broker 10 is provided with a first channel adapter, in this embodiment comprising a first channel adapter servlet 22, a second channel adapter, in this embodiment comprising a second channel adapter servlet 23 and a plurality of channels 24 each addressable by the first channel adapter servlet 22 and second channel adapter servlet 23. In the present example, the channel adapters 22, 23 are servlets which run within a thread allocated by the servlet engine 10a to process incoming HTTP requests. The servlets 22, 23 are operable to run appropriate to perform a "push" or "pull" operation to place messages in the channel 24 and withdraw messages from the channel 24 respectively.

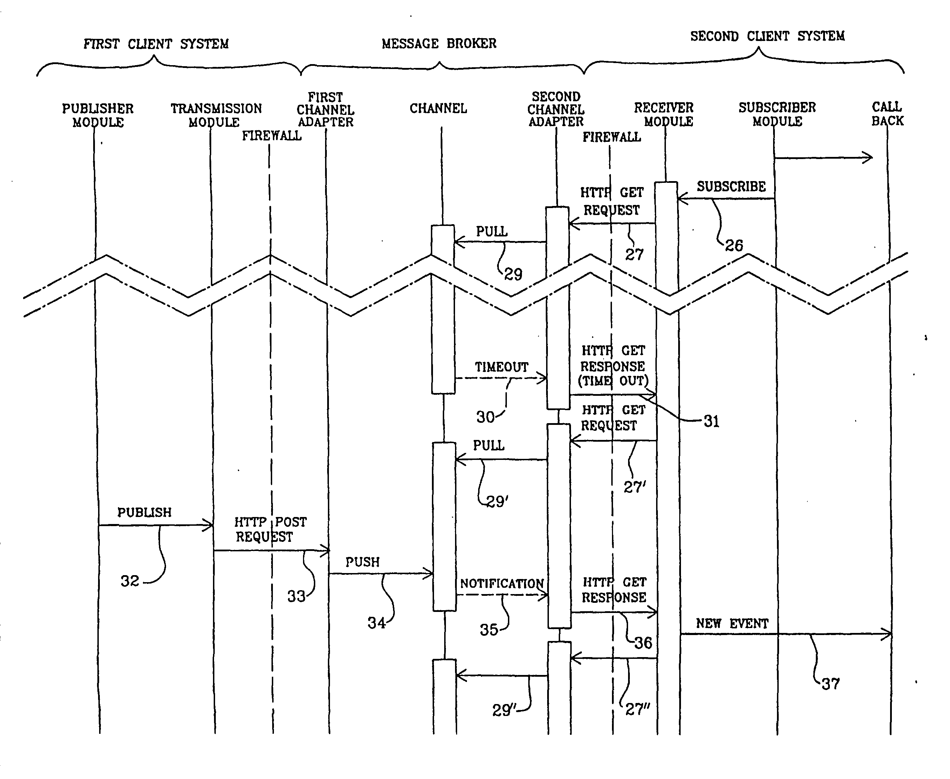

Referring now to Figures 1 and 2, the communication system works as follows. The subscriber module 18 is instructed to invoke the call back module 21 on occurrence of a new message. The subscriber module 18 sends a subscribe instruction 26 to the receiver module 19. The subscribe instruction 26 contain source information corresponding to a message channel to enable the message broker 21 to establish an appropriate communication link. The receiver module 19 generates a message request 27 in the form of an HTTP GET request, including the source information from the subscribe instruction 26. The HTTP GET request is transmitted via the Internet link 14 to the message broker 10. In conventional manner the message broker servlet engine 10a receives the HTTP request and runs the second channel adapter servlet as specified in the HTTP request. The servlet 23 then processes the HTTP request, by reading the GET request 27 to obtain the source information to identify the relevant channel. In the present example, the source information is simply a channel identification name or number.

Once a channel has been identified, in this case the channel 28, the second channel adapter servlet 23 performs a pull operation 29 to attempt to pull an event from the channel 28. Where no event is found, i.e. no message has been placed in channel 28, no response will be sent by the second channel adapter servlet 23 until, in the present example, a pre-determined period of time has elapsed. In the present example, since the pull request is performed by a servlet 23, if there is no information in the identified channel the thread running the servlet 23 will "sleep" until the standard time-out period elapses or notification of a message "push" is received. Once the predetermined time period has elapsed, the thread running the servlet 23 is woken up in conventional manner. The second channel adapter servlet 23 then sends a standard time-out response to the receiver module 20. In this example, the standard HTTP time-out error message will be sent, code 504, as the HTTP GET response 31. On receipt of the time-out response 31, the receiver module 19 then promptly retransmits a GET request 27', and the second channel adapter servlet 23 on receipt of the HTTP GET request 27' will once again attempt to pull a message from the channel 28. This cyclical process of the receiver module 20 transmission a GET request to the second channel adapter servlet 23, receiving a time out response 31 and re-transmitting a GET request 27 may continue indefinitely until a message is received.

To send a message via the message broker 10, the publisher module 15 of the first client system 11 will generate message information, including destination information and content information i.e. the body of the message, and forward this message as a publish instruction 32 to the transmission module 16. The transmission module 16 will generate a message 33 in the form of an HTTP POST request and transmit this information via the firewall 17 and the Internet link 13 to the message broker 10. The message 33 is received by the message broker servlet engine 10a which runs the first channel adapter servlet 22 as specified in the HTTP request. The servlet 22 then processes the HTTP request by reading the destination information and identifies the appropriate channel in which the message should be placed. In the present example, as for the GET request source information, the destination information is simply a channel identification name or number. If no such channel exists, the first channel adapter servlet 22 may dynamically create the channel, i.e. allocate the channel name to one of the plurality of channels 24. In this example, the channel 28 is identified and the servlet 22 performs a push operation 34 to place the message on the identified channel. The first channel adapter servlet 22 then sends a notification 35 is sent to any thread listening to that channel, in this example the second channel adapter servlet 23.

Referring to Figure 2, the push operation 34 has now placed the message in the channel 28 within the predetermined time-out period from the pull operation 29'. The second channel adapter servlet 23 receives the notification 35 and acts to pull the message from the channel 28. The second channel adapter servlet 23 then transmits a standard response to the HTTP GET request 36, including at least the content information of the message 32. In this example, the receiver module 20 then transmits a new event notification 37 to the call back module 21, including the message content information as part of the argument as part of the new event notification 37. In this example, the second receiver module 20 then transmits a new HTTP GET request 27", the second channel adapter servlet 23 then transmits a further pull request 29" and the cycle continues.

The communication system described is this particularly adaptable in allowing cross-platform operation and is scalable to any number of client systems 11, 12 as may be desired. The repeated GET request/GET response cycle thus enables a published message to be retrieved by the recipient in nearly real time, and the use of the HTTP protocol to transmit and retrieve messages enables the messages to pass through the respective firewalls 17, 20.

However, in the current HTTP protocol, a time out response is automatically provided. The time out response 30 might be advantageously regarded as a "heart beat" response, indicating the ongoing operation of the message broker 10.

In an alternative implementation, it might be envisaged that the functionality of the servlets 22, 23 could be implemented instead at socket level. A thread processing a HTTP PUT request will check whether there is a socket connection associated with the message channel. If yes, the message is simply be sent to the client system using the socket connection information, and then the socket connection is removed. If there is no socket connection, the message is stored in the message channel as discussed before. To retrieve a message, a thread processing an HTTP GET request checks the specified message channel. If a message is stored in the message channel, it is returned to the client system. Otherwise, the socket connection is stored as information associated with the message channel, and a time out specification placed in a time queue. If a message is pushed into the channel before time out occurs, the thread processing the HTTP PUT request simply sends the message to the client using the socket connection information as discussed above. In the event of a time out, the thread associated with the time out will wake up and retrieve the message channel identification name or number associated with the time out. If there is still socket connection information associated with the message channel, a time out response is sent to the client system using the socket connection and then the socket connection information is removed. If no socket connection information is associated with the message channel, this indicates that a message was sent to a client system in the interim. No action is then taken and the thread returns to the start of the process.

It will be clear that provisions may be made for example for security by using secure HTTP (HTTPS), message persistent storage and acknowledgement protocols as desired.

It will be apparent that a message to be transmitted by the message broker 10, both the first client system 11 and the second client system 12 must know the channel identification name or number of the appropriate message channel. For secure communication, it will also be apparent that the channel identification name or number must not be known to any third party. The channel identification name or number may be established between the first client system 11 and the second client system 12 by any means as desired For example, the second client system 12 may transmit a request to the message broker 10 for a channel for communication with the first client system 11. The message broker 10 may then allocate a channel and transmit an appropriate channel identification name or number via a secure connection to the first client system 11 and second client system 12. Alternatively, where there is some other communication link between the first client system 11 and second client system 12, the first client system 11 may simply transmit the channel identification name or number to the second client system 12. As discussed hereinbefore, if a first client system posts a message to the message broker 10, if a channel with the channel identification name or number does not exist, it will be created automatically, and the other client system 12 is then able to send a GET request including the channel identification name or number. It might also be envisaged that the message broker could comprise an address information store 25 which could contain address information, for example the addresses of the client systems 11, 12 and corresponding channel identification information if required.

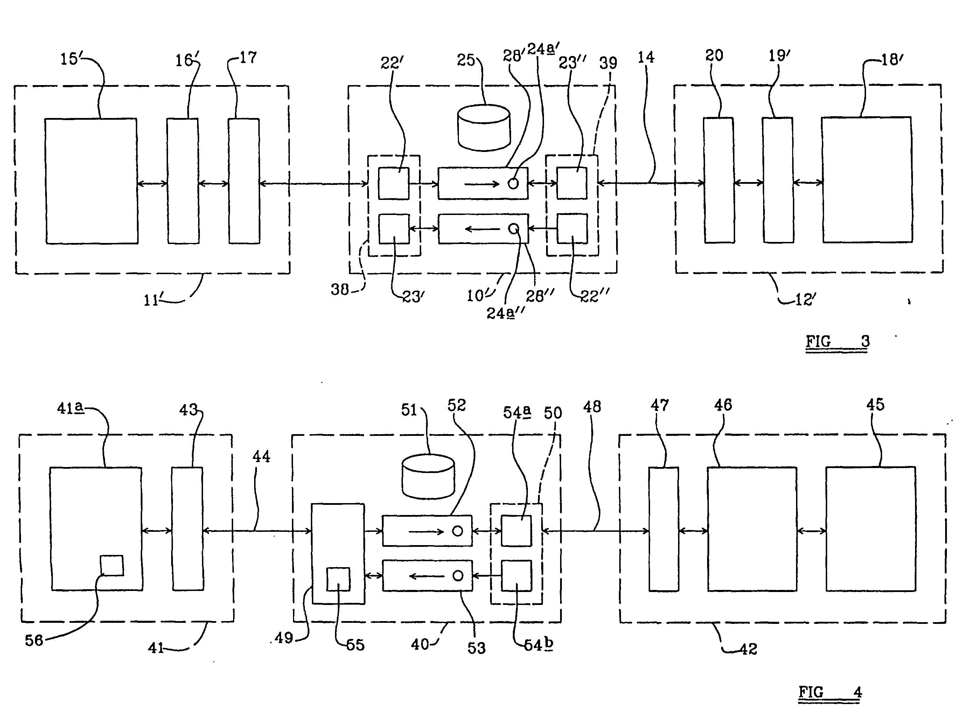

A message broker may be used to establish bi-directional communications as shown in Figure 3. Two channels, 28', 28" are allocated to establish a two-way communication link between a first client system 11' and a second client system 12'. In this example, the first client system 11' and second client system 12' are provided with publisher/subscriber modules 15', 18' which perform the functions of both modules 15 and 18 as set out above. Similarly, the client systems 11', 12' comprise transmission/receiver modules 16', 19' which have the functionality of both modules 16 and 19 as described above. A message broker 10' is provided with a first combined channel adapter 40 and a second combined adapter 41. The first combined channel adapter 40 comprises a first adapter element 22' operable to push messages onto channel 28' in the same manner as the first channel adapter servlet 22, and a second adapter element 23' operable to pull messages from channel 28" in the same manner as the second channel adapter servlet 23 described above. Similarly, the second combined channel adapter module 41 comprises a first adapter element 22" adapted to push messages onto channel 28" in like manner to the first channel adapter servlet 22 described above, and a second adapter element 23" operable to pull messages from channel 28' in the same manner of the second channel adapter servlet 23 described above. Using such an arrangement, each client system 11', 12' is operable both to transmit and receive messages via the message broker 10' using the method as described above in relation to Figure 1. Because the system of Figure 3 can be made transparent, it will be apparent that any suitable communication protocol may be used by the client systems 11', 12'.

It will be clear that such a communication system will have many potential applications. Two example applications will now be described, although it will be apparent that the potential applications are not limited to these two examples.

Referring to Figure 4, a message broker embodying the invention is indicated at 40 and is similar in operation to the message broker of Figures 1 to 3. A first client system is shown at 41 and a second client system at 42. In this example, the first client system 41 comprises a computer provided with a browser 41a of conventional type which connects via a firewall 43 and an Internet connection 44 to the message broker 40. The second client system 42 comprises an intranet web server 45, and an HTTP server adapter 46 operable to address the intranet web server 45, and also to connect via a firewall 47 and Internet connection 48 to the message broker 40.

The message broker 40 comprises an HTTP client adapter 49 and a server channel adapter 50. An address information store 51 is also provided. Two channels are allocated by the message broker 40 to form a link between the first client system 41 and a second client system 42. A first, permanent, channel 52 is operable to receive messages from the HTTP client adapter as discussed hereinbefore The message broker 40 also allocates a second, temporary channel 53 to receive messages from the server channel adapter 50. The server channel adapter 50 comprises a first adapter element 54a, operable to pull messages from a channel 52 in like manner to the second adapter module 23 described hereinbefore. The server channel adapter 50 comprises a second adapter element 54b operable to push messages onto the channel 53 in like manner to the first adapter module 22 described hereinbefore. The HTTP client adapter 49 is operable to push messages onto the permanent channel 52, and pull messages from the temporary channel 53. The client adapter 49 is also provided with an authentication element 55.

The system works as follows. A HTTP GET request is generated in conventional manner by the browser 41a and transmitted via the firewall 43 and Internet connection 44 to the message broker 40, where it is processed by the HTTP client adapter 49. The HTTP GET request may comprise a URL in conventional manner. Alternatively, where the information is available on the first client system 41 it may comprise additional destination information, such as the host name and port number of the destination intranet web server, or channel information. Such information may be stored in a cookie 56 on the first client system 41, or may be retrieved from the address information store 51. The HTTP GET request from the browser 41a is of course permitted to pass via the firewall 43 in conventional manner.

The HTTP client adapter 49 encapsulates the client request in HTTP form with the destination host name and port number added in the message header.

The message is pushed into permanent channel 52. The HTTP server adapter 46 and the first adapter element 54a of the server adapter are continually monitoring the permanent channel 52 in like manner to the second channel adapter 23 of Figure 1. Thus, when a message is pushed into the permanent channel 52, it is retrieved and transmitted to the HTTP server adapter 46 through the firewall 47. The HTTP server adapter 46 extracts the HTTP client request and the destination host name and port number and sends the HTTP request to the intranet web server identified by the host name and port number.

The intranet web server 45 returns a standard HTTP GET response to the HTTP server adapter 46. The host name and port number of the intranet web server are replaced by the host name and port number of the message broker. The response is transmitted via the firewall 47 and Internet connection 48 to the message broker 40. The second adapter element 54 pushes the response into temporary channel 53. The HTTP client adapter 49 pulls the message from the temporary channel 53 and retrieves the HTTP response. The HTTP response is parsed and changed such that the intranet web server address found in the absolute URL is substituted by a corresponding message broker URL, and then sent via the Internet connection 44 and firewall 43 to the browser 41a in a conventional manner. The message broker domain is stored as a cookie 56 in the browser 41a for future use.

The request and response transmitted via the Internet link 48 may be encrypted or secured by appropriate means as desired, in the present example using secure socket layer (SSL) protocol. The message broker 40 can provide authentication and authorisation before the request is transmitted to the intranet web server 45, and so provide secure access to the intranet server 45 through the firewall 47.

Once the response has been pulled from the temporary channel 53 by the HTTP client adapter 49, the message broker 40 reallocates the temporary channel 53, making it available for other messages.

The HTTP client adapter 49 has similar functionality to the combined adapter module 38, but with the additional functions of encapsulating the HTTP client request and providing authentication and authorisation. The browser 42 may be enabled to access the Intranet web server by provision of an appropriate cookie which provides the necessary information to the HTTP client adapter 49, for example as part of the cookie 56. The cookie could be electronically signed by the provider of the intranet web server 45 such that the user of the browser 42 is happy to install the cookie 56 on his computer.

It will be apparent that although the message broker 40 has been described in terms of the system of Figures 1 to 3, such remote access to an intranet could be performed using any appropriate message broker system operable to receive an HTTP request from a first client system and forward the request in response to an HTTP request received from the second client system.

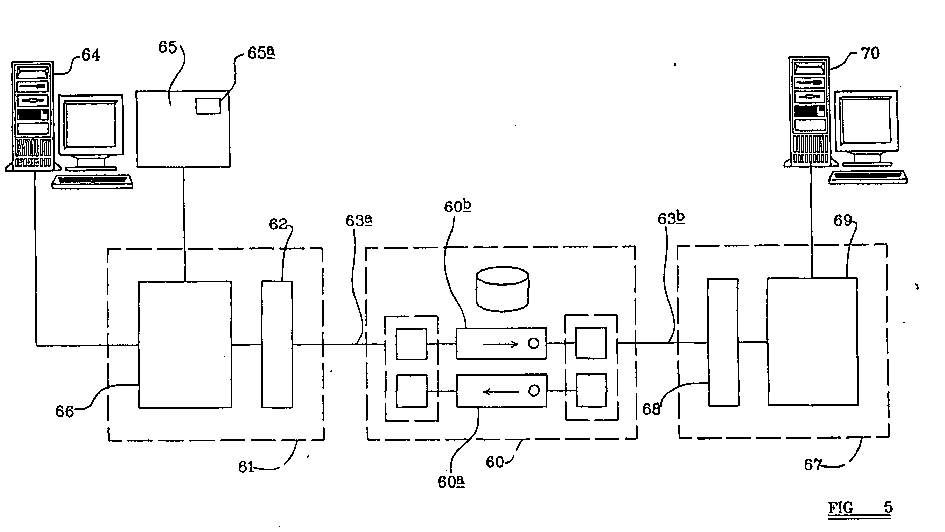

A application of a message broker is shown in Figure 5, and relates to remote control of a device via the Internet using a message broker. A suitable configuration is shown in Figure 5. A message broker system 60 is shown which operates in the same manner as the message broker 10' of Figure 3. In this example, a first client system 61 is shown which comprises an appropriate network server comprising a firewall 62 and an Internet connection 63a, At least one PC 64 and a printer 65 are connected to the first client system 61. The first client system 61 is also provided with a device communication mobile comprising a remote diagnostic support tool (RDST) 66. The remote diagnostic support tool 66 is operable to communicate with the printer 65, in the present example using a standard peripheral meta language (PML).

The second client system 67 comprises a remote system which requires access to the printer 65, for example a technical support agency. The second client system 67 comprises a firewall 68, a remote control module 69 and an Internet connection 63b. At least one PC 70 is connected to the second client system 67.

The printer 65 is provided in this example with a control panel 65a of conventional type. Using the control panel 65a, a user is able to check and vary the printer configuration. The control panel 65a is also addressable by the remote diagnostic support tool 66 using PML.

When is desired to provide the second client system 67 with remote access to the printer 65, the remote diagnostic support tool 66 is enabled from the PC 64 to address the printer 65 and to establish a link over the Internet connection 63. The message broker 60 establishes a bi-directional communication channel comprising message channels 60a, 60b, as described hereinbefore in relation to Figure 3. The PC 70 sends a device instruction to the remote control module 69. The remote control module generates a message encoded as an HTTP instruction comprising the device instruction, destination information identifying the message channel 60a and also device identification information as required. The remote control device 69 then sends the message through the firewall 68, and message broker 60 to the remote diagnostic support tool 66. The remote diagnostic support tool 66 transmits the device instruction to the printer 65. The printer 65 may return device information, in this example the printer make, serial number, and configuration. The RDST 66 then encodes the device information as an HTTP POST request, including destination information corresponding to the message channel 60b, and transmits this instruction to the remote control tool 69 via the message broker 60. This printer information is then transferred to the PC 70. It might be envisaged that the printer information be displayed as a simulated control panel, for example, an display 71. The operator of the PC 70 is then able to transmit further appropriate device instructions, for example to reconfigure the printer or transmit appropriate software update via the remote control 69 and remote diagnostic support tool 66 to the printer 65. The updated printer configuration can then be retrieved by the remote diagnostic support tool 66 and retransmitted to the remote control 69 as before. It might also be envisaged that, for example, updated driver software might be sent to the PC 64. Once the session has ended, the connections 63a, 63b to the message broker 60 are dropped. Such an arrangement permits nearly real time remote control of the printer 65 via the Internet.

It will be apparent that this configuration may be used to provide remote control of any appropriate device via the Internet, and not necessarily merely a printer.

It will be apparent that appropriate authentication and security may be provided at any relevant point of the system. A basic security feature is that the user of the PC 64 must enable the remote diagnostic support tool 66 to open a communication channel before the second client system 67 can obtain remote access to the printer 65. It might be envisaged that the messages transmitted by the second client system 67 are electronically signed or provided with an electronic certificate to confirm their authenticity.

Where the first client system 61 is connected to a plurality of printers, the relevant printer may be identified by any appropriate device identification means, for example its IP address, the domain name server name or a network address as appropriate.

Any device which supports PML may be controlled in such a manner, not merely printers.

It will be apparent that this application may be used with any appropriate message forwarding system as desired, and not necessarily simply with a message broker 60 as described herein. All the messages may be encrypted using secure socket layer protocol. The remote control is provided without requiring the setting up of a phone/modem connection, or by requiring the support agency in this example to give telephone instructions to the user on how to configure a printer and ask for feedback.

It will be apparent that the invention described herein may be implemented in any desired manner, whether in hardware, software or otherwise. Apparently, the invention may be implemented on conventional hardware provided with appropriate software according to the present invention.

In the present specification "comprise" means "includes or consists of" and "comprising" means "including or consisting of".

The features disclosed in the foregoing description, or the following claims, or the accompanying drawings, expressed in their specific forms or in terms of a means for performing the disclosed function, or a method or process for attaining the disclosed result, as appropriate, may, separately, or in any combination of such features, be utilised for realising the invention in diverse forms thereof.

## Claims

1. A message broker (40) for providing remote access for a first client system (41) to a second client system (42) comprising an intranet (45), the message broker (40) comprising a permanent message channel (52), a client adapter (49) and a server channel adapter (50), the client adapter (49) being operable to receive a request encoded in an Internet protocol format comprising request information from the first client system (41), receive a response from the second client system (42), and transmit a client response encoded in an Internet protocol accordingly to the first client system (41).
**characterised in that**:
the permanent message channel (52) is addressable by the client adapter (49) and the server channel adapter (50);
the client adapter (39) is further operable to place a message comprising destination information and the request information in the permanent channel (52);
the message broker (40) is operable to establish a temporary message channel (53) on receipt of the request;
the server channel adapter (50) is operable to receive a message request from the second client system (42) encoded in an Internet protocol and identifying the permanent channel (52),
send a pull request to the permanent channel (52), and
when a message is contained in the permanent channel, transmit the message contained in the permanent channel (52) to the second client system (42),
receive a message from the second client system (42) comprising response information, and
place a message comprising the response information in the temporary channel (53);
and wherein the client adapter (49) is further operable to send a pull request to the temporary channel (53), receive a message from the temporary channel (53), and transmit the client response accordingly to the first client system (41).

2. A message broker (40) according to claim 1 wherein the Internet protocol is HTTP.

3. A message broker according to claim 1 or claim 2 wherein, when the client response is transmitted, the message broker is operable to reallocate the temporary channel (53).

4. A message broker (40) according to any one of the preceding claims operable to authorise the request prior to placing the request information in the permanent channel (52).

5. A message broker (40) according to any one of the preceding claims wherein the intranet (45) comprises an intranet web server and the destination information comprises the host name and port number of the intranet web server.

6. A server adapter (46) operable to link a client system carrying an intranet (45) and a message broker (40) having a permanent message channel (52), the server adapter (46) being operable to
send a message request encoded in Internet protocol format to the message broker (40) comprising source information identifying the permanent message channel (52), and
receive a response from the message broker (40), comprising one of a time out message and a response and, where the response comprises a message,
read the message to identify request information and destination information,
transmit the request to a server of the intranet identified by the destination information,
receive response information from the server in response to the request, and
transmit a message comprising response information encoded in an Internet protocol to the message broker (40),
and wherein the response comprises a time out, send a further message request comprising source information identifying the permanent message channel (52) to the message broker (40).

7. A server adapter (46) according to claim 6 wherein the destination information comprises the host name and port number of the intranet server.

8. A server adapter (46) according to claim 6 or claim 7 wherein the Internet protocol comprises HTTP.

## Patentansprüche

1. Ein Mitteilungsvermittler (40) zum Liefern von entferntem Zugriff für ein erstes Clientsystem (41) zu einem zweiten Clientsystem (42), das ein Intranet (45) umfasst, wobei der Mitteilungsvermittler (40) einen permanenten Mitteilungskanal (52), einen Clientadapter (49) und einen Serverkanaladapter (50) umfasst, wobei der Clientadapter (49) wirksam ist, um eine Anforderung zu empfangen, die in einem Internetprotokollformat codiert ist, die Anforderungsinformationen von dem ersten Clientsystem (41) umfasst, um eine Antwort von dem zweiten Clientsystem (42) zu empfangen und eine Clientantwort, die in einem Internetprotokoll codiert ist, entsprechend zu dem ersten Clientsystem (41) zu übertragen;
**dadurch gekennzeichnet, dass**:
der permanente Mitteilungskanal (52) durch den Clientadapter (49) und den Serverkanaladapter (50) adressierbar ist;
der Clientadapter (49) ferner wirksam ist, um eine Mitteilung, die Bestimmungsortinformationen und die Anforderungsinformationen umfasst, in den permanenten Kanal (52) zu platzieren;
der Mitteilungsvermittler (40) wirksam ist, um auf den Empfang der Anforderung hin einen temporären Mitteilungskanal (53) einzurichten;
der Serverkanaladapter (50) wirksam ist, um eine Mitteilungsanforderung von dem zweiten Clientsystem (42) zu empfangen, die in einem Internetprotokoll codiert ist und den permanenten Kanal (52) identifiziert,
eine Zieh-Anforderung an den permanenten Kanal (52) zu senden, und
wenn in dem permanenten Kanal eine Mitteilung enthalten ist, die Mitteilung, die in dem permanenten Kanal (52) enthalten ist, zu dem zweiten Clientsystem (42) zu übertragen,
eine Mitteilung von dem zweiten Clientsystem (42), die Antwortinformationen umfasst, zu empfangen, und
eine Mitteilung, die die Antwortinformationen umfasst, in den temporären Kanal (53) zu platzieren;
und wobei der Clientadapter (49) ferner wirksam ist, um eine Zieh-Anforderung an den temporären Kanal (53) zu senden, eine Mitteilung von dem temporären Kanal (53) zu empfangen und die Clientantwort entsprechend zu dem ersten Clientsystem (41) zu übertragen.

2. Ein Mitteilungsvermittler (40) gemäß Anspruch 1, bei dem das Internetprotokoll HTTP ist.

3. Ein Mitteilungsvermittler gemäß Anspruch 1 oder Anspruch 2, bei dem, wenn die Clientantwort übertragen wird, der Mitteilungsvermittler wirksam ist, um den temporären Kanal (53) neu zuzuweisen.

4. Ein Mitteilungsvermittler (40) gemäß einem der vorhergehenden Ansprüche, der wirksam ist, um die Anforderung vor dem Platzieren der Anforderungsinformationen in den permanenten Kanal (52) zu autorisieren.

5. Ein Mitteilungsvermittler (40) gemäß einem der vorhergehenden Ansprüche, bei dem das Intranet (45) einen Intranetwebserver umfasst und die Bestimmungsortinformationen den Hostnamen und die Tornummer des Intranetwebservers umfassen.

6. Ein Serveradapter (46), der wirksam ist, um ein Clientsystem, das ein Intranet (50) trägt, und einen Mitteilungsvermittler (40), der einen permanenten Mitteilungskanal (52) aufweist, zu verbinden, wobei der Serverkanaladapter (46) wirksam ist zum
Senden einer Mitteilungsanforderung, die in dem Internetprotokollformat codiert ist, an den Mitteilungsvermittler (40), die Quellinformationen umfasst, die den permanenten Mitteilungskanal (52) identifizieren, und
Empfangen einer Antwort von dem Mitteilungsvermittler (40), die entweder eine Auszeitmitteilung oder eine Antwort umfasst, und wenn die Antwort eine Mitteilung umfasst,
Lesen der Mitteilung, um Anforderungsinformationen und Bestimmungsortinformationen zu identifizieren,
Übertragen der Anforderung an den Server des Intranets, das durch die Bestimmungsortinformationen identifiziert wird,
Empfangen von Antwortinformationen von dem Server ansprechend auf die Anforderung, und
Übertragen einer Mitteilung, die Antwortinformationen umfasst, die in einem Internetprotokoll codiert sind, an den Mitteilungsvermittler (40),
und wenn die Antwort eine Auszeit umfasst, Senden einer weiteren Mitteilungsanforderung, die Quelleninformationen umfasst, die den permanenten Mitteilungskanal (52) identifizieren, an den Mitteilungsvermittler (40).

7. Ein Serveradapter (46) gemäß Anspruch 6, bei dem die Bestimmungsortinformationen den Hostnamen und die Tornummer des Intranetservers umfassen.

8. Ein Serveradapter (46) gemäß Anspruch 6 oder Anspruch 7, bei dem das Internetprotokoll HTTP umfasst.

## Revendications

1. Un médiateur (40) de message destiné à permettre à un premier système (41) de client un accès à distance à un deuxième système (42) de client comprenant un intranet (45), le médiateur (40) de message comprenant un canal permanent (52) de message, un adaptateur (49) de client et un adaptateur (50) de canal de serveur, l'adaptateur (49) pouvant intervenir pour recevoir une demande codée dans un format de protocole Internet comprenant une information de demande du premier système (41) de client, recevoir une réponse du deuxième système (42) de client, et transmettre de façon correspondante au premier système (41) de client une réponse de client codée dans un protocole Internet,
**caractérisé en ce que**
le canal permanent (52) de message peut être adressé par l'adaptateur (49) de client et l'adaptateur (50) de canal de serveur;
l'adaptateur (49) de client peut en outre intervenir pour placer dans le canal permanent (52) un message comprenant une information de destination et l'information de demande;
le médiateur (40) de message peut intervenir pour établir un canal temporaire (53) de message à réception de la demande;
l'adaptateur (50) de canal de serveur peut intervenir pour recevoir du deuxième système (42) de client une demande de message codée dans un protocole Internet et identifiant le canal permanent (52);
envoyer une demande d'extraction au canal permanent (52), et
lorsqu'un message est contenu dans le canal permanent, transmettre le message contenu dans le canal permanent (52) au deuxième système (42) de client,
recevoir du deuxième système (42) de client un message comprenant une information de réponse, et
placer un message comprenant l'information de réponse dans le canal temporaire (53);
et dans lequel l'adaptateur (49) de client peut en outre intervenir pour envoyer une demande d'extraction au canal temporaire (53), recevoir un message du canal temporaire (53) et transmettre de façon correspondante la réponse de client au premier système (41) de client.

2. Un médiateur (40) de message selon la revendication 1, dans lequel ledit protocole Internet est le HTTP.

3. Un médiateur (40) de message selon la revendication 1 ou la revendication 2 dans lequel, lorsque la réponse du client est transmise, le médiateur de message peut intervenir pour réallouer le canal temporaire (53).

4. Un médiateur (40) de message selon l'une quelconque des revendications précédentes qui peut intervenir pour autoriser la demande avant de placer l'information de demande dans le canal permanent (52).

5. Un médiateur (40) de message selon l'une quelconque des revendications précédentes dans lequel l'intranet (45) comprend un serveur de web d'intranet et l'information de destination comprend le nom de l'hôte et le numéro de port du serveur de web d'intranet.

6. Un adaptateur (46) de serveur qui peut intervenir pour relier un système de client portant un intranet (45) et un médiateur (40) de message à canal permanent (52) de message, l'adaptateur (46) de serveur pouvant intervenir pour:
envoyer au médiateur (40) de message une demande de message codée dans un format de protocole Internet, comprenant une information de source identifiant le canal permanent (52) de message, et
recevoir du médiateur (40) de message une réponse comprenant soit un message de temps écoulé, soit une réponse, et, lorsque la réponse comprend un message:
lire le message pour identifier une information de demande et une information de destination,
transmettre la demande au serveur de l'intranet identifié par l'information de destination,
recevoir une information de réponse du serveur en réponse à la demande, et
transmettre au médiateur (40) de message un message comprenant une information de réponse codée dans un protocole Internet,
et lorsque la réponse contient un message de temps écoulé, envoyer au médiateur (40) de message une autre message comprenant une information de source identifiant le canal permanent (52) de message.

7. Un adaptateur (46) de serveur selon la revendication 6, dans lequel l'information de destination comprend le nom de l'hôte et le numéro de port du serveur d'intranet.

8. Un adaptateur (46) de serveur selon la revendication 6 ou la revendication 7 dans lequel le protocole Internet comprend le HTTP.
